# EUROPÄISCHE PATENTSCHRIFT

(11) **EP 3 316 337 B1**
(45) Veröffentlichungstag und Bekanntmachung des Hinweises auf die Patenterteilung: **04.12.2019**
(21) Anmeldenummer: 16195836.8
(22) Anmeldetag: 26.10.2016
(51) Int. Cl.: H01M 2/02, H01M 2/26, H01M 2/30

(54) **BATTERIE, ABLEITERELEMENT HIERFÜR UND VERFAHREN ZUR HERSTELLUNG EINES ABLEITERELEMENTS UND EINER BATTERIE**
BATTERY, LEAD TAB THEREFOR AND METHOD FOR PRODUCING A LEAD TAB AND A BATTERY
BATTERIE, PATTE DE CONNEXION POUR CELA, ET PROCÉDÉ DE FABRICATION D'UNE PATTE DE CONNEXION ET D'UNE BATTERIE

(43) Veröffentlichungstag der Anmeldung: 02.05.2018
(73) Patentinhaber: VARTA Microbattery GmbH, 73479 Ellwangen (DE)
(72) Erfinder: Brenner, Rolf, 73479 Ellwangen (DE)
(74) Vertreter: Patentanwaltskanzlei Cartagena

(56) Entgegenhaltungen:
- CN-Y- 201 004 475
- DE-T5-112011 101 990
- US-A1- 2006 051 664
- US-A1- 2011 223 454
- US-A1- 2013 252 053

## Beschreibung

### ANWENDUNGSGEBIET UND STAND DERTECHNIK

Die Erfindung betrifft eine Batterie nach dem Oberbegriff von Anspruch 1 sowie ein Ableiterelement hierfür nach dem Oberbegriff von Anspruch 9. Die Erfindung betrifft weiterhin Verfahren zur Herstellung eines Ableiterelements und zur Herstellung einer Batterie nach den Ansprüchen 10 und 12.

Der Begriff "Batterie" meinte ursprünglich mehrere in Serie geschaltete galvanische Zellen. Heute werden jedoch auch einzelne galvanische Zellen (Einzelzellen) häufig als Batterie bezeichnet. Im Sinne dieser Erfindung ist eine Batterie eine von einem gemeinsamen Gehäuse nach außen abgeschlossene Einheit mit einer oder mehreren galvanischen Zellen.

Bei der Entladung einer galvanischen Zelle findet eine energieliefernde chemische Reaktion statt, welche sich aus zwei elektrisch miteinander gekoppelten, aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt zu einem der Elektrodenreaktion entsprechenden lonenstrom innerhalb der Zelle. Dieser lonenstrom wird durch einen Ionen leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Unter den bekannten sekundären Batterien werden vergleichsweise hohe Energiedichten insbesondere von Lithium-Ionen-Batterien erreicht, also von Batterien, bei denen bei Lade- und Entladeprozessen Lithium-lonen von einer Elektrode zur anderen wandern.

Eine Lithium-Ionen-Batterie umfasst mindestens eine Einzelzelle mit mindestens einer positiven und mindestens einer negativen Elektrode. Insbesondere kann sie eine Einzelzelle in Form eines Wickels umfassen.

In vielen Fällen ist die mindestens eine Einzelzelle einer Lithium-Ionen-Batterie in den Innenraum eines prismatischen Metallgehäuses eingeschoben. Üblicherweise setzt sich das Metallgehäuse aus einem Behältnis mit einem rechteckigen Gehäuseboden und vier im rechten Winkel dazu angeordneten Seitenwänden sowie einem Gehäusedeckel, der im Wesentlichen die gleiche Form und Größe wie der Gehäuseboden aufweist, zusammen. Mit anderen Worten, es ist bevorzugt quaderförmig. Der Gehäusedeckel ist in aller Regel kaum profiliert und kann als näherungsweise eben bezeichnet werden. Meist wird das Metallgehäuse verschlossen, indem die Ränder des Gehäusedeckels mit dem Öffnungsrand des Behältnisses verschweißt werden.

Die Batterie kann zwei Kontaktpole umfassen, von denen einer (der sogenannte positive Kontaktpol) über eine erste vom Metallgehäuse elektrisch isolierte Poleinheit mit der mindestens einen positiven Elektrode und der andere (der sogenannte negative Kontaktpol) über eine zweite vom Metallgehäuse elektrisch isolierte Poleinheit mit der mindestens einen negativen Elektrode verbunden ist. Es ist aber auch möglich, dass das Metallgehäuse selbst als positiver oder negativer Kontaktpol oder zumindest als elektrische Brücke zwischen einem der Kontaktpole und der mindestens einen positiven oder der mindestens einen negativen Elektrode fungiert. In diesem Fall muss das Gehäuse elektrisch mit der mindestens einen positiven Elektrode oder der mindestens einen negativen Elektrode verbunden werden.

Der Erfindung liegt die Aufgabe zugrunde, eine besonders vorteilhafte Möglichkeit zur Verfügung zu stellen, um eine der Elektroden oder einen hieran vorgesehenen Kontaktabschnitt mit der zugeordneten Poleinheit zu verbinden. Hierbei geht es insbesondere um eine Lösung, die ein hohes Maß an Flexibilität aufweist, so dass sie auch im Falle von beabsichtigt oder unbeabsichtigt variierenden Relativanordnungen zwischen dem Kontaktabschnitt der Elektrode einerseits und der Poleinheit andererseits verwendbar bleibt, idealerweise ohne konstruktive Anpassung oder aber mit einer unaufwändigen konstruktiven Anpassung. Da die erfindungsgemäße Batterie auch oder sogar insbesondere als Teil eines Antriebsbatteriemoduls eines Kraftfahrzeugs Anwendung finden soll, wird eine Verbindungsmöglichkeit gesucht, die auch bei Erschütterungen und Vibrationen im Fahrbetrieb zuverlässig bleibt.

Aus der US 2006/0051664 A1 ist eine Batterie mit Ableiterelementen bekannt, die über eine Mehrzahl von Teilabschnitten verfügen, die jeweils mit Elektroden der Batterie verbunden sind, wobei zwischen diesen Teilabschnitten und einem Kollektoranschluss jeweils eine Torsion der Teilabschnitte vorgesehen ist.

Aus der DE 11 2011 101 990 T5 sowie aus der US 2011/0223454 A1 sind Batterien mit Ableiterelementen bekannt, die jeweils zweifach um zueinander angewinkelte Biegelinien angewinkelt sind.

Aus der CN 201004475 Y ist eine Rundzelle bekannt, die über ein zweifach gebogenes Ableiterelement verfügt, wobei die jeweiligen Biegelinien parallel zueinander ausgerichtet sind.

Aus der US 2013/0252053 A1 ist eine Batterie bekannt, die über ein zweifach gebogenes Ableiterelement verfügt, wobei ein Abschnitt zwischen den zwei Biegelinien dafür vorgesehen ist, durch einen Einschnitt eines Elektrodenstapels hindurch geführt zu werden.

### AUFGABE UND LÖSUNG

Erfindungsgemäß wird folgende Ausgestaltung einer Batterie vorgeschlagen: Die Batterie umfasst ein Gehäuse mit einer Gehäusewandung, die einen Innenraum der Batterie umgibt, sowie mindestens eine Poleinheit, die elektrisch leitfähig ausgestaltet ist und die die Gehäusewandung durchdringt. Im Innenraum der Batterie befindet sich mindestens eine galvanische Einzelzelle mit mindestens zwei Elektroden, wobei mindestens eine Elektrode mit mindestens einer Poleinheit mittels eines Ableiterelements verbunden ist. Dieses Ableiterelement weist einen ersten Verbindungsabschnitt zur Anbringung an mindestens einem Kontaktabschnitt der Elektrode und einen zweiten Verbindungsabschnitt zur Anbringung an der Poleinheit auf.

Das genannte Ableiterelement ist als Blechteil ausgestaltet, also aus einem flachen metallischen Streifen hergestellt. Es verfügt zwischen dem ersten Verbindungsabschnitt und dem zweiten Verbindungsabschnitt über eine besondere Formgebung zur Erzielung der beabsichtigten Flexibilität. Vorgesehen sind hier mindestens zwei Biegebereiche, im Bereich derer das Blechteil entlang einer Biegelinie gebogen ist, sowie mindestens ein Torsionsbereich, im Bereich dessen das Blechteil schraubenartig tordiert ist.

Unter einem Biegebereich im Sinne dieser Erfindung wird ein Bereich mit einer Biegeverformung des Blechteils entlang der genannten Biegelinie verstanden, deren Biegeradius maximal dem achtfachen der Blechdicke entspricht. Unter einem Torsionsbereich im Sinne dieser Erfindung wird ein Bereich mit einer Verformung verstanden, durch die die Oberfläche des Blechteils entlang einer Haupterstreckungsrichtung quer zu dieser kontinuierlich ansteigend verkippt wird, so dass in Haupterstreckungsrichtung gegenüberliegende Flächenabschnitte beidseitig des Torsionsbereichs gegeneinander um die Haupterstreckungsrichtung verkippt und hierdurch schräggestellt sind.

Das erfindungsgemäß in der Batterie vorgesehene Ableiterelement gestattet durch die eingebrachten Biegebereiche und Torsionsbereiche eine gleichzeitig sichere Kontaktierung mit dem Kontaktabschnitt der Elektrode und der Poleinheit einerseits sowie ein hohes Maß an Flexibilität in der Fertigung, in der Montage und im Betrieb andererseits. Durch die Biegebereiche und den oder die Torsionsbereiche können der elektrodenseitige Verbindungsabschnitt und der poleinheitsseitige Verbindungsabschnitt mit vergleichsweise geringem Kraftaufwand und ohne Verursachung von Beschädigungen relativ zueinander bewegt werden. Ein entsprechender Bedarf kann beispielsweise bestehen, um bei verschiedenen Varianten der Batterie mit unterschiedlicher Positionierung der betreffenden Elektrode und der Poleinheit gegeneinander dennoch baugleiche Ableiterelemente verwenden zu können. Auch fertigungsbedingte oder montagebedingte Ungenauigkeiten in der Relativanordnung können ohne Veränderung des Ableiterelements aufgrund der Biegebereiche und der Torsionsbereiche einfach ausgeglichen werden. Im Betrieb ermöglichen es insbesondere die Biegebereiche, Relativverlagerungen aufgrund von Vibrationen und Erschütterungen zuverlässig aufzunehmen und somit zu verhindern, dass das Ableiterelement zum elektrodenseitigen Kontaktabschnitt oder zur Poleinheit den leitenden Kontakt verliert.

Bei kleineren Variationen in Hinblick auf die Relativanordnung des Kontaktabschnittes und der Poleinheit bedarf es somit keiner Anpassung des Ableiterelements jenseits einer beispielsweise während der Montage stattfindenden leichten Verformung. Aber auch wenn verschiedene Varianten der Batterien eine signifikant abweichende Relativanordnung vorsehen, ist ein erfindungsgemäßes Ableiterelement vorteilhaft, da alleine durch die Anordnung der Biegebereiche oder Torsionsbereiche oder den jeweiligen Grad an Biegung oder Torsion ausgehend von einem unveränderten Blechstanzteil eine angepasste Version des Ableiterelements einfach herstellbar ist.

Darüber hinaus gestatten es die Biege- und Torsionsbereiche, die Anbringung des als Blechteil ausgebildeten Ableiterelements am elektrodenseitigen Kontaktabschnitt einerseits und an der Poleinheit andererseits in voneinander abweichenden Ausrichtungen vorzunehmen. So ist bei einer bevorzugten Gestaltung der Erfindung der Kontaktabschnitt der Elektrode relativ zu einem Deckel des Gehäuses orthogonal ausgerichtet, wobei der zwischen dieser orthogonalen Ausrichtung und der planen Ausrichtung des Gehäusedeckels erforderliche Übergang durch die Kombination von Biegebereichen und Torsionsbereichen erzielbar ist.

Das genannte Gehäuse der Batterie weist vorzugsweise eine prismatische Formgebung auf, insbesondere vorzugsweise eine quaderförmige Formgebung. Wie einleitend bereits erwähnt, kann das Gehäuse mit nur einer Poleinheit ausgebildet sein, wenn die Gehäusewandungen den anderen Pol bilden. Vorzugsweise jedoch weist die Batterie zwei elektrisch leitfähige Poleinheiten auf, die jeweils die Gehäusewandung durchdringen. Bei einer Gestaltung mit zwei Poleinheiten, die die Gehäusewandung durchdringen, sind diese vorzugsweise auf der gleichen Seite des Gehäuses vorgesehen und durchdringen somit die gleiche flache Gehäusewandung.

Das genannte als Blechbiegeteil ausgebildete Ableiterelement, welches im Weiteren noch näher erläutert wird, ist in einer erfindungsgemäßen Batterie mindestens einfach vorhanden. Bei einer Batterie mit zwei Poleinheiten sind jedoch vorzugsweise beide mittels eines solchen Ableiterelements mit dem jeweiligen Kontaktabschnitt der jeweiligen Elektrode der Batterien verbunden, wobei insbesondere vorzugsweise aus wirtschaftlichen Gründen baugleiche Ableiterelemente Verwendung finden.

Das Ableiterelement ist vorzugsweise aus einem Blech aus Kupfer, Nickel, Silber, Gold, Aluminium, Zinn oder Edelstahl oder aus einer hierauf basierenden Legierung als Basismaterial hergestellt. Es kann einseitig oder beidseitig mit einer Beschichtung versehen sein.

Die Dicke des Blechs, aus dem das Ableiterelement durch Umformen hergestellt wird, und somit auch die Dicke des Ableiterelements selbst beträgt vorzugsweise zwischen 0,2mm und 2,0mm, insbesondere vorzugsweise zwischen 0,4mm und 1,2mm, wobei die konkret zweckmäßige Dicke von den zu erwartenden mechanischen Belastungen und dem bestimmungsgemäß zu leitenden Strom abhängt.

Zwischen den beiden Verbindungsabschnitten des Ableiterelements sind erfindungsgemäß mindestens zwei Biegebereiche vorgesehen, deren Biegelinien zueinander im Wesentlichen parallel ausgerichtet sind und entlang derer das Ableiterelement in gegenläufigen Biegerichtungen gebogen ist. Unter einer im Wesentlichen parallelen Ausrichtung wird dabei verstanden, dass die Ausrichtungen um nicht mehr als 10° voneinander abweichen. Das Ableiterelement ist dabei vorzugsweise entlang mindestens einer der Biegelinien um mehr als 90° abgekantet.

Durch zwei parallele Biegelinien zwischen den an entgegengesetzten Enden vorgesehenen Verbindungsabschnitten des Ableiterelements wird ein besonders hohes Maß an Verlagerbarkeit erzielt, wenn erfindungsgemäß Biegewinkel größer 90° Verwendung finden. Das Ableiterelement ist dadurch abschnittsweise Z-artig geformt. Dies gestattet es, den oberen und den unteren Balken dieses Z im Rahmen der Montage gegeneinander vergleichsweise weit zu verlagern, wobei der Schrägbalken des Z dies kompensiert, so dass verhindert wird, dass durch die Bewegung des einen Verbindungsabschnitts eine zu starke Zugwirkung auf den anderen Verbindungsabschnitt ausgeübt wird.

Zwischen den beiden Verbindungsabschnitten des Ableiterelements sind vorzugsweise mindestens zwei Biegebereiche vorgesehen, deren Biegelinien gegeneinander angewinkelt sind, vorzugsweise um einen Winkel von mindestens 60°. Diese Ausrichtung bezieht sich auf den erfindungsgemäß verformten Zustand des Ableiterelements.

Das Vorhandensein von zueinander angewinkelten Biegelinien zwischen den Verbindungsabschnitten, insbesondere wenn diese einen großen Winkel einschließen, idealerweise von etwa 90°, führt zu einer Relativverlagerbarkeit der Verbindungsabschnitte gegeneinander in mehreren Raumrichtungen. Ähnliches kann auch durch die genannten Torsionsbereiche erzielt werden, da die schraubenartige Verformung des Blechs im Torsionsbereich dazu führt, dass das Blech bezogen auf verschiedene orthogonal zu seiner Haupterstreckungsrichtung ausgerichtete Raumrichtungen Teilbereiche aufweist, die einer Verformung nur ein geringes Widerstandsmoment entgegensetzen.

Der erste Verbindungsabschnitt des Ableiterelements, also der Verbindungsabschnitt zur Anbindung am Kontaktabschnitt der Elektrode, verfügt vorzugsweise über zwei Teilverbindungsabschnitte, die an zwei Fortsätzen des Ableiterelements vorgesehen sind, welche beide von einem gemeinsamen Hauptabschnitt des Ableiterelements abgehen.

Vorzugsweise sind an jedem der beiden Fortsätze jeweils mindestens zwei Biegebereiche vorgesehen, deren Biegelinien zueinander im Wesentlichen parallel ausgerichtet sind, wobei insbesondere vorzugsweise mindestens zwei einander zugeordnete Biegelinien an den beiden Fortsätzen gegeneinander angewinkelt ausgerichtet sind. Unter der im Wesentlichen parallelen Ausrichtung wird verstanden, dass die Ausrichtungen um nicht mehr als 10° voneinander divergieren. Die angewinkelte Stellung der Biegelinien der beiden Fortsätze zueinander bezieht sich auf eine voneinander um mehr als 10° abweichende Ausrichtung.

Das Vorsehen der Biegebereiche, insbesondere jeweils zweier Biegebereiche, an den getrennt vom Hauptabschnitt des Ableiterelements abgehenden Fortsätzen gestattet eine voneinander abweichende Verformung in den Biegebereichen, was wiederum die Relativverlagerbarkeit der Verbindungsabschnitte zueinander begünstigt. Durch die voneinander abweichende Ausrichtung der Biegelinien an den beiden Fortsätzen wird zusätzlich erreicht, dass die beiden Fortsätze und damit die beiden an ihnen vorgesehenen Teilverbindungsabschnitte zur Kontaktierung des Kontaktabschnitts der Elektrode in Abhängigkeit der jeweiligen Biegung sich einander annähern oder voneinander entfernen. Hierdurch ist das Ableiterelement besonders gut für elektrodenseitige Kontaktabschnitte verschiedener Dicke verwendbar.

Die Fortsätze sind vorzugsweise derart tordiert, dass eine Haupterstreckungsebene der Teilverbindungs-abschnitte mit einer Haupterstreckungsebene des Hauptabschnitts einen Winkel von etwa 90° (+/- 20°) einschließen.

Die schraubenartige Verformung im Torsionsbereich führt in der oben beschriebenen Weise zu einer Flexibilität der Relativanordnung der Verbindungsabschnitte in einer Vielzahl von Richtungen, die durch die Flächennormalen im Torsionsbereich definiert werden. Eine Torsion von in etwa 90° ist darüber hinaus geeignet, eine leitende Verbindung zwischen dem Kontaktabschnitt der Elektrode und einer Anlagefläche der Poleinheit zur Verfügung zu stellen, wenn diese orthogonal zueinander ausgerichtet sind.

Die Fortsätze sind vorzugsweise in gegenläufigem Drehsinn tordiert. Durch den gegenläufigen Drehsinn ist es möglich, das Ableiterelement mit zwei zueinander im Wesentlichen parallelen Fortsätzen symmetrisch zueinander zu gestalten, so dass die Verformbarkeit ebenfalls ein spiegelbildliches Verhalten zeigt.

Der erste Verbindungsabschnitt des Ableiterelements verfügt, wie oben bereits erwähnt, vorzugsweise über zwei Teilverbindungsabschnitte, die auf gegenüberliegenden Seiten des Kontaktabschnitts der Elektrode angeordnet sind und flächenparallel zueinander an dieser anliegen.

Das Ableiterelement kann mittels einer Schweiß- oder Lötverbindungverbindung mit dem Kontaktabschnitt der Elektrode verbunden sein.

Die flächenparallele Ausrichtung der beiden Teilverbindungsabschnitte und die Anordnung der Teilverbindungsabschnitte beidseitig des Kontaktabschnitts der Elektrode gestattet es, eine besonders stabile Verbindung herzustellen. Diese kann insbesondere durch Widerstandsschweißen oder Laserschweißen durch den aus den zwei Teilverbindungsabschnitten und dem dazwischenliegenden Kontaktabschnitt gebildeten Stoß hindurch erfolgen.

Galvanische Einzelzellen sind häufig als Wickel oder als Stoß von Elektroden ausgebildet, wobei in einem solchen Fall eine Vielzahl gleichpoliger Kontaktabschnitte vorgesehen sein kann, die gemeinsam mit einer Poleinheit verbunden sind. Bei einer solchen Gestaltung ist dieser Vielzahl von Kontaktabschnitten vorzugsweise nur ein Ableiterelement der beschriebenen Art zugeordnet, welches mit allen Kontaktabschnitten gleichzeitig verbunden ist, insbesondere indem diese von zwei Teilverbindungsbereichen des Ableiterelements unmittelbar umgriffen werden, so dass durch Widerstandsschweißen oder Laserschweißen durch die zwei Teilverbindungsbereiche und durch die Kontaktabschnitte hindurch auf einfache Weise die Verbindung geschaffen werden kann. Alternativ können die Kontaktabschnitte zunächst mit einem gemeinsamen Kontaktabschnitt verbunden sein, der seinerseits mit dem Ableiterelement verbunden ist.

Alternativ zur genannten Schweiß- oder Lötverbindung kann das Ableiterelement mittels eines einer kraftschlüssig gegen Trennen gesicherten Verbindung, insbesondere einer Klemmverbindung, oder mittels einer formschlüssigen Verbindung, insbesondere mittels einer Nietverbindung, einer Schraubverbindung oder einer Stiftverbindung mit dem Kontaktabschnitt der Elektrode verbunden sein.

Mit der Poleinheit kann das Ableiterelement insbesondere mittels einer formschlüssig gegen Trennen gesicherten Verbindung verbunden sein, insbesondere mittels einer Schraubverbindung.

Zur Herstellung einer solchen Schraubverbindung, aber auch einer Nietverbindung oder einer Stiftverbindung, zwischen dem Ableiterelement und der Poleinheit oder der Elektrode ist vorzugsweise mindestens eine Durchbrechung im Ableiterelement vorgesehen, die bereits beim Stanzen des Blechteils aus dem das Ableiterelement gefertigt ist, eingebracht werden kann.

Die Verbindung des Ableiterelements mit der Poleinheit mittels einer Schraubverbindung wird als sehr sicher und störungsarm angesehen. Sie ist vor allen Dingen auch deswegen sinnvoll, da die Einbringung einer zum Anschrauben geeigneten Durchbrechung des Ableiterelements mit nur sehr geringem Aufwand einhergeht, da dieses ohnehin vorzugsweise als Stanzteil ausgebildet ist, so dass die zusätzliche Einbringung der genannten Durchbrechung keinerlei Mehraufwand bedeutet.

Alternativ kann das Ableiterelement mittels eines einer kraftschlüssig gegen Trennen gesicherten Verbindung, insbesondere einer Klemmverbindung, oder mittels einer stoffschlüssig gegen Trennen gesicherten Verbindung, insbesondere mittels einer Schweiß- oder Lötverbindung mit der Poleinheit verbunden sein.

Die Erfindung betrifft auch ein Ableiterelement für eine Batterie zur Herstellung einer elektrischen Verbindung zwischen einem Kontaktabschnitt einer Elektrode und einer Poleinheit der Batterie. Das Ableiterelement weist einen ersten Verbindungsabschnitt zur Anbringung am Kontaktabschnitt der Elektrode und einen zweiten Verbindungsabschnitt zur Anbringung an der Poleinheit auf. Das Ableiterelement ist als Blechteil ausgestaltet, welches zwischen dem ersten Verbindungsabschnitt und dem zweiten Verbindungsabschnitt über mindestens zwei Biegebereiche verfügt, im Bereich derer das Blechteil entlang einer Biegelinie gebogen ist, und über mindestens einen Torsionsbereich verfügt, im Bereich dessen das Blechteil schraubenartig tordiert ist.

Die oben im Zusammenhang mit der erfindungsgemäßen Batterie beschriebenen ergänzenden optionalen Merkmale in Hinblick auf das Ableiterelement gelten gleichermaßen für das erfindungsgemäße Ableiterelement selbst.

Die Erfindung betrifft weiterhin ein Verfahren zur Herstellung eines Ableiterelements zur Verbindung eines Kontaktabschnitts einer Elektrode einer Batterie mit einer Poleinheit der Batterie.

Dabei wird zunächst in einem Stanzschritt aus einem Metallblech ein Flachteil ausgestanzt. In einem darauf folgenden Umformschritt wird das Flachteil mindestens zweimal in zwei Biegebereichen entlang jeweils einer Biegelinie gebogen und mindestens einmal in einem Torsionsbereich tordiert und erhält somit die für das Ableiterelement gewünschte Formgebung.

Bei bevorzugten Ausgestaltungen sieht der Umformschritt mehrere Biegeoperationen vor, die gleichzeitig oder nacheinander durchgeführt werden. Welche Operationen das sein können, ergibt sich aus der obenstehenden Darstellung möglicher Ausgestaltungen des gewünschten Ableiterelements. Insbesondere die Einbringung von mehreren zueinander parallelen und/oder zueinander nichtparallelen Biegelinien kann von Vorteil sein.

Der Stanzschritt kann auch genutzt werden, um mindestens eine Durchbrechung in das Flachteil einzubringen, insbesondere um damit eine Anbringungsbohrung zu schaffen, mittels derer das Ableiterelement mit der Poleinheit verbunden werden kann.

Die Erfindung betrifft weiterhin ein Verfahren zur Herstellung einer Batterie. Dabei wird mindestens ein Ableiterelement mittels der Verfahrensmerkmalen des oben erläuterten Verfahrens erzeugt. Dieses Ableiterelement wird dann einerseits mit einem Kontaktabschnitt einer Elektrode und andererseits mit einem Polschuh der Batterie elektrisch verbunden.

Die Verbindung zwischen dem ersten Verbindungsabschnitt des Ableiterelements und dem Kontaktabschnitt der Elektrode erfolgt vorzugsweise mittels Widerstandschweißens. Die Verbindung zwischen dem zweiten Verbindungsabschnitt und der Poleinheit erfolgt vorzugsweise durch eine Schraubverbindung, insbesondere mir einer von innen durch die Durchbrechung in der Gehäusewandung geführte Schraube, die an der Außenseite mittels einer Polmutter gesichert ist.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutert ist.
Fig. 1 zeigt eine erfindungsgemäße Batterie in einer Gesamtdarstellung.
Fig. 2 und 3 zeigen die Kontaktierung zwischen einem in dem Gehäuse der Batterie angeordneten Elektrodenwickel und Poleinheiten bei ausgeblendetem Gehäuse in zwei unterschiedlichen Perspektiven.
Fig. 4 und 5 zeigen einen Schnitt durch die Batterie im Bereich ihrer Poleinheiten sowie anhand dessen den Aufbau der Poleinheiten.
Fig. 6 bis 10 zeigen ein Ableiterelement der Batterie, wobei Fig. 6 und 10 ein Zwischenzustand im Rahmen der Fertigung verdeutlichen, bei dem das Ableiterelement aus einem Blech ausgestanzt ist, jedoch noch nicht durch Umformen in seine Endform gebracht wurde.

### DETAILLIERTE BESCHREIBUNG DES AUSFÜHRUNGSBEISPIELS

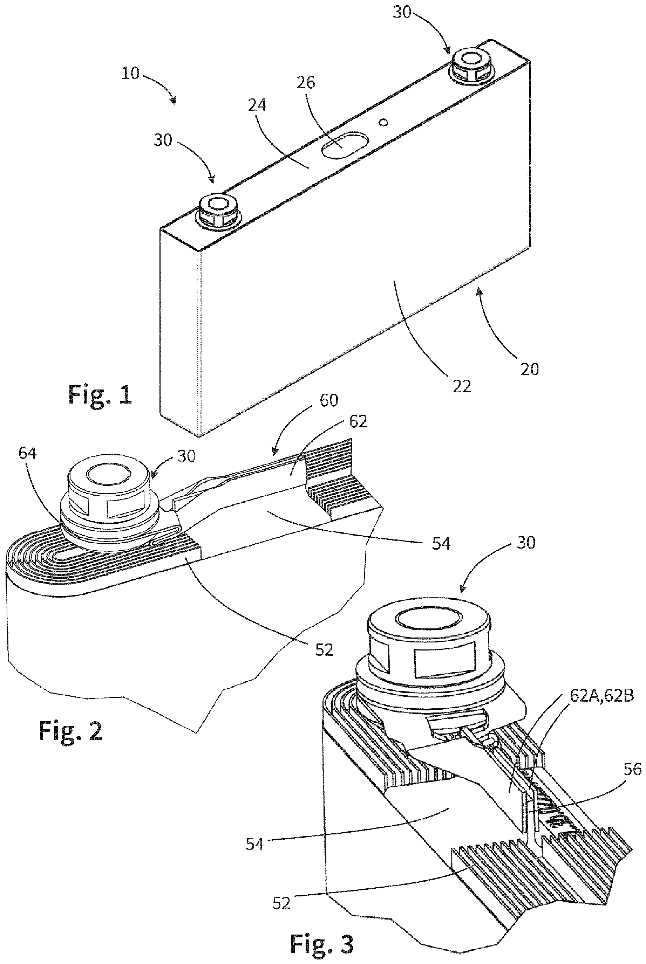

Fig. 1 zeigt eine erfindungsgemäße Batterie 10. Es handelt sich vorliegend exemplarisch um eine Batterie, die bestimmungsgemäß gemeinsam mit typgleichen Batterien zu einem Batteriemodul für Kraftfahrzeugantriebe kombiniert wird. Die Batterie 10 verfügt über ein Gehäuse 20 rechteckiger Form, welches aus einer Gehäuseschale 22 und einem an der Oberseite eingesetzten Gehäusedeckel besteht, der die obere Gehäusewandung 24 bildet. In der Gehäusewandung 24 ist eine Membran 26 vorgesehen, um einer Überdruckbildung im Gehäuse 20 und einer damit einhergehenden Explosionsgefahr entgegenzuwirken.

In der Gehäusewandung 24 sind zwei Poleinheiten 30 vorgesehen, die zum Verschalten der Batterie mit anderen Batterien und einem Verbraucher vorgesehen sind.

Die Fig. 2 und 3 zeigen einen Abschnitt der Batterie 10 bei ausgeblendetem Gehäuse 20. Die Batterie umfasst eine Einzelzelle in Form eines Elektrodenwickels 50, wobei die gleichpoligen Elektroden 52 dieses Elektrodenwickels 50 jeweils mit Kontaktabschnitten 54 versehen sind, die zu einem Kontaktabschnittsstoß 56 zusammengeführt sind. In den Fig. 2 und 3 sind die Kontaktabschnitte 54 der positiven Elektrode dargestellt. Wenngleich in diesen Figuren nicht dargestellt, so ist die Anordnung auf der gegenüberliegenden Seite der Batterie jedoch analog gestaltet. Dort sind die Kontaktabschnitte 54 der negativen Elektroden zu einem Kontaktabschnittsstoß 56 zusammengeführt.

Die Verbindung zwischen der der Gehäusewandung 24 durchdringenden Poleinheit 30 und dem Kontaktabschnittsstoß 56 erfolgt über ein Ableiterelement 60, welches im Weiteren noch im Detail erläutert wird. Dieses Ableiterelement 60 verfügt über einen zweigeteilten Verbindungsabschnitt 62 zur Verbindung mit dem Kontaktabschnittsstoß 56 sowie über einen gelochten zweiten Verbindungsabschnitt 64, mittels dessen das Ableiterelement 60 an der Poleinheit 30 festgeschraubt ist.

In Hinblick auf den ersten Verbindungsabschnitt 62 lässt sich insbesondere der Fig. 3 ersehen, wie dieser zweigeteilt ist und wie die beiden Teilverbindungsabschnitte beidseitig des Kontaktabschnittsstoßes 56 angeordnet sind. Die Verbindung hier zwischen ist beispielsweise durch Widerstandsschweißen herstellbar, wobei die Zweiteilung des ersten Verbindungsabschnittes dahingehend positiv wirkt, dass der zum Schweißen verwendete Strom aufgrund des vergleichsweise langen Weges im Ableiterelement von einem Teilverbindungsabschnitt 62A, 62B zum anderen tendenzielle in höherem Maße durch den Kontaktabschnittsstoß 56 fließt und somit die Widerstandsschweißwirkung begünstigt.

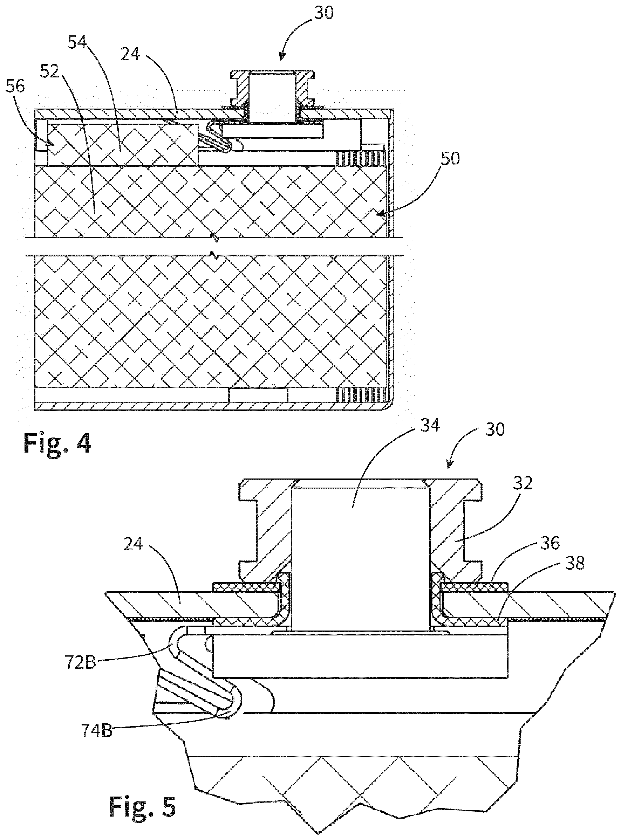

Anhand der Fig. 4 und 5 ist insbesondere der Aufbau der Poleinheiten 30 erläutert, diesmal im Zusammenhang mit der der negativen Elektrode zugeordneten Poleinheit 30. Wie sich insbesondere anhand der Fig. 5 ersehen lässt, verfügt die Poleinheit 30 über eine Polmutter 32 außenseitig des Gehäuses, in die eine Polschraube 34 von der Innenseite aus eingeschraubt ist. Durch Dichtungen 36, 38 wird verhindert, dass es zu einer leitenden Verbindung zwischen der Polschraube 34 oder der Polmutter 32 einerseits und die Gehäusewandung 24 andererseits kommt. Der zweite Verbindungsabschnitt 64 des Ableiterelements 60 ist zwischen der Dichtung 38 und dem Kopf der Polschraube 34 eingesetzt, wobei die Polschraube 34 durch eine Durchbrechung 66 im zweiten Verbindungsabschnitt 64 hindurchragt. Diese Form der Verbindung ist ausgesprochen stabil und kaum störanfällig.

Die in den Fig. 4 und 5 nicht dargestellte andere Poleinheit weist einen funktional identischen Aufbau auf.

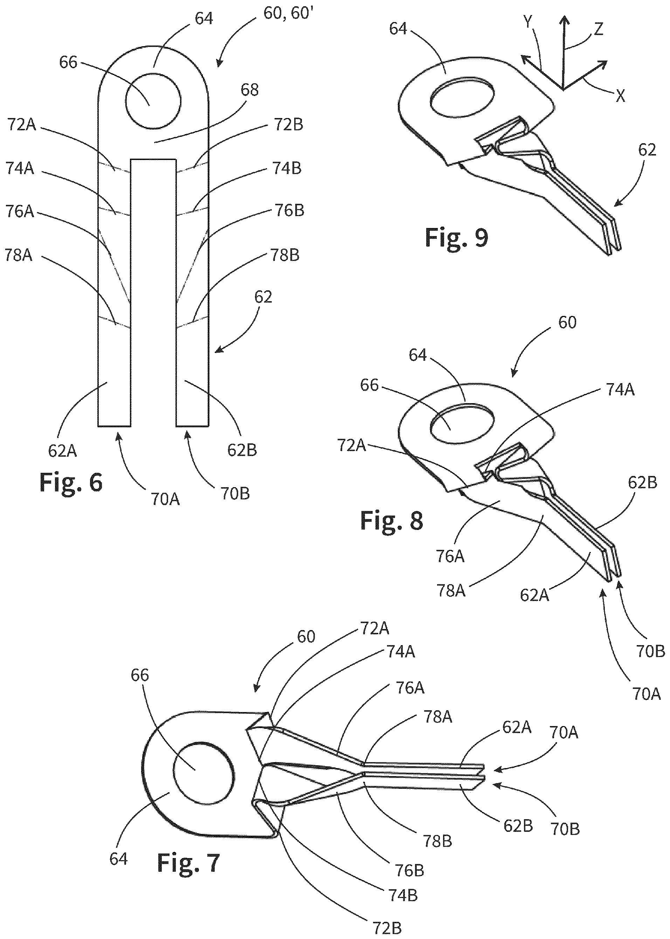

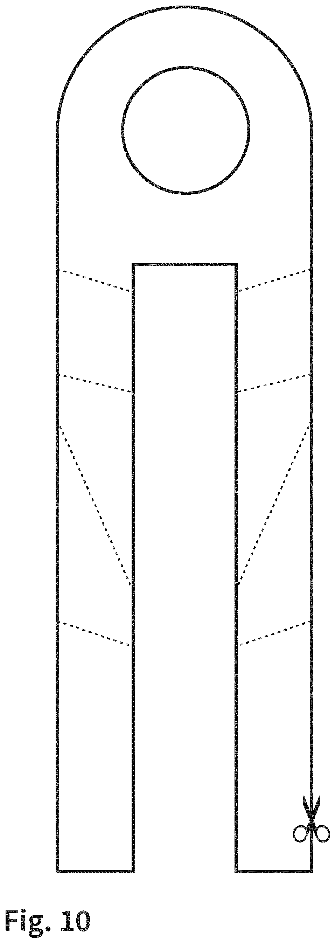

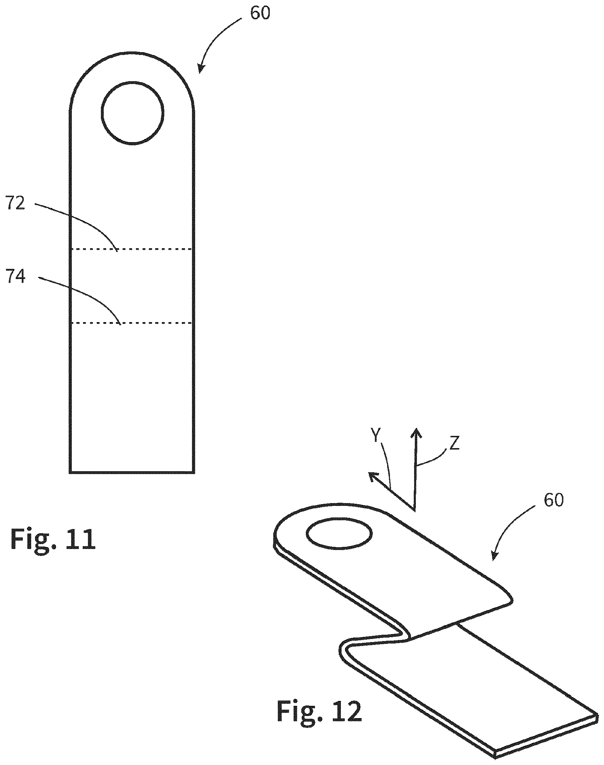

Die Fig. 6 bis 10 verdeutlichen die Ableiterelemente 60 im Detail. Den Fig. 6 und 10 ist das Ableiterelement 60 zu entnehmen, jedoch noch als Flachteil 60' in einem Zwischenzustand der Fertigung, in dem sich das Ableiterelement 60 vor einer anstehenden Biegeverformung noch in einem Flachzustand befindet. Anhand der Fig. 6 ist gut zu ersehen, dass das Ableiterelement 60 über einen gelochten Hauptabschnitt 68 verfügt, der gleichzeitig auch den zweiten Verbindungsabschnitt 64 zur Kontaktierung der Poleinheiten 30 bildet. Hiervon gehen die beiden Fortsätze 70A, 70b bezogen auf den dargestellten Flachzustand der Fig. 6 in Haupterstreckungsrichtung Y parallel ab. Zu ersehen ist weiterhin, dass die beiden schmalen Fortsätze 70A, 70b jeweils symmetrisch mit drei Biegelinien 72A, 72B, 74A, 74B, 78A, 78B ausgestattet sind, wobei zwischen den Biegelinien 74A, 74B einerseits und 78A, 78B andererseits jeweils ein Torsionsbereich 76A, 76B vorgesehen ist. Entlang der Biegelinien 72A, 72B, 74A, 74B, 78A, 78B wird das Flachteil 60' zur Bildung des Ableiterelements 60 bestimmungsgemäß umgebogen. Im Torsionsbereich 76A, 76B werden die Fortsätze 70A, 70b bestimmungsgemäß tordiert.

Die Fig. 7 und 8 verdeutlichen, wie das separate Ableiterelement nach diesen Umformoperationen aussieht. Es ist gut zu erkennen, dass die Z-artige Biegung im Bereich der Biegelinien 72A, 72B, 74A, 74B gegensinnig um jeweils deutlich über 90° zu einer Art Überlappung führt, wobei aufgrund der Schrägstellung der einander jeweils zugeordneten Biegelinien beider Fortsätze 70A, 70b die Fortsätze 70A, 70b hierdurch auch einander angenähert werden. Weiterhin ist zu erkennen, dass die Biegelinien 72A, 72B, 74A, 74B nicht nur vor der Biegung am Flachteil 60' zueinander parallel ausgerichtet sind, sondern dies auch noch nach der Umformung sind. Erst in den Torsionsbereichen 76A, 76B ändert sich die Ausrichtung der Flächennormalen deutlich, so dass in den Teilverbindungsabschnitten 62A, 62B die Flächennormale gegenüber der Flächennormalen im Hauptabschnitt 68 um etwa 90° verkippt ist, was der jeweils erforderlichen Orientierung zur Anbringung an der Poleinheit 30 einerseits und am Kontaktabschnittsstoß 56 andererseits ermöglicht.

Die durch die von den Biegungen und dem Torsionsbereich ermöglichte Verformbarkeit zur Erzielung einer Relativverlagerbarkeit der Verbindungsabschnitte 62 und 64 gegeneinander wird anhand von Fig. 9 erläutert. Eine Relativverlagerung in Y-Richtung ist aufgrund der Z-förmigen Struktur im Bereich der Biegelinien 72A, 72B, 74A, 74B gegeben. Allerdings geht diese Relativverlagerung in Y-Richtung auch mit einer geringen Relativverlagerung in Z-Richtung einher. Diese kann jedoch im Bereich der Torsionsbereiche 76A, 76B ausgeglichen werden. Auch eine reine Verlagerung der Verbindungsabschnitte 62, 64 in Z-Richtung ist aufgrund der Torsionsbereiche 76A, 76B ohne Aufwendung großer mechanischer Arbeit möglich. Eine Verlagerung in X-Richtung wird dadurch ermöglicht, dass in diesem Falle die beiden Fortsätze 70A, 70b in unterschiedlichem Maße in den Torsionsbereichen 76A, 76B und/oder im Bereich der Biegelinien 78A, 78B verformt werden.

All diese Verformbarkeitsgrade führen dazu, dass herstellungsbedingte Ungenauigkeiten in der Montage ohne weiteres kompensiert werden können. Auch bestimmungsgemäße Veränderungen an der Batterie, beispielsweise geringfügige Verlagerungen der Poleinheiten in X-Richtung, können mit dem gleichen Ableiterelement 60 aufgrund seiner Verformbarkeit realisiert werden. Im Falle von zu großen Änderungen an der Batterie ist die Bauweise des erfindungsgemäßen Ableiterelements besonders von Vorteil, da üblicherweise eine Verlagerung der Biegelinien und/oder der Torsionsbereiche bei gleichbleibender Formgebung des Flachteils 60' ausreichen, um solche Veränderung zu kompensieren.

Die genannte Flexibilität hilft nicht nur bei unbeabsichtigten Fertigungsungenauigkeiten oder beabsichtigten Batterievarianten, sondern auch im Betrieb, da Erschütterungen und Vibrationen, durch die die Kontaktabschnitte 54 der Elektroden gegenüber den Poleinheiten ruckartig verlagert werden, ausreichend kompensiert werden können, so dass keine starken Kräfte auf die Anbindung des Ableiterelements 60 an die Kontaktabschnitt 54 und die Poleinheit 30 wirken und es somit nicht zu einem Defekt der Batterie kommt.

## Patentansprüche

1. Batterie (10) mit den folgenden Merkmalen:
a. die Batterie (10) umfasst ein Gehäuse (20) mit einer Gehäusewandung (24), die einen Innenraum der Batterie (10) umgibt, und
b. die Batterie (10) umfasst mindestens eine Poleinheit (30), die elektrisch leitfähig ausgestaltet ist und die die Gehäusewandung (24) durchdringt, und
c. die Batterie (10) umfasst in ihrem Innenraum mindestens eine Einzelzelle mit mindestens zwei Elektroden (52),
d. mindestens eine Elektrode (52) ist mit mindestens einer Poleinheit (30) mittels eines Ableiterelements (60) verbunden, welches einen ersten Verbindungsabschnitt (62) zur Anbringung an mindestens einem Kontaktabschnitt (54) der Elektrode (52) und einen zweiten Verbindungsabschnitt (64) zur Anbringung an der Poleinheit (30) aufweist, und
e. das Ableiterelement (60) ist als Blechteil ausgestaltet, welches zwischen dem ersten Verbindungsabschnitt (62) und dem zweiten Verbindungsabschnitt (64) über mindestens zwei Biegebereiche verfügt, im Bereich derer das Blechteil jeweils entlang einer Biegelinie (72, 74, 72A, 72B, 74A, 74B, 78A, 78B) gebogen ist, und
f. die Biegelinien (72, 74, 72A, 72B, 74A, 74B, 78A, 78B) sind zueinander im Wesentlichen parallel ausgerichtet sind, d.h. dass die Ausrichtungen der Biegelinien um nicht mehr als 10° voneinander abweichen und entlang der Biegelinien (72, 74, 72A, 72B, 74A, 74B, 78A, 78B) ist das Ableiterelement (60) in gegenläufigen Biegerichtungen um Biegewinkel größer 90° gebogen, so dass das Ableiterelement (60) abschnittsweise Z-artig geformt ist, **gekennzeichnet durch** das folgende zusätzliche Merkmal:
g. das Ableiterelement (60) verfügt zwischen dem ersten Verbindungsabschnitt (62) und dem zweiten Verbindungsabschnitt (64) über mindestens einen Torsionsbereich (76A, 76B), im Bereich dessen das Blechteil schraubenartig tordiert ist.

2. Batterie (10) nach einem der Ansprüche 1 mit dem folgenden Merkmal:
a. zwischen den beiden Verbindungsabschnitten (62, 64) des Ableiterelements sind mindestens zwei Biegebereiche vorgesehen, deren Biegelinien gegeneinander angewinkelt sind.

3. Batterie (10) nach einem der Ansprüche 1 und 2 mit dem folgenden Merkmal:
a. der erste Verbindungsabschnitt (62) des Ableiterelements (60) verfügt über zwei Teilverbindungsabschnitte (62A, 62B), die an zwei Fortsätzen (70A, 70B) des Ableiterelements vorgesehen, welche beide von einem gemeinsamen Hauptabschnitt (68) des Ableiterelements (60) abgehen.

4. Batterie (10) nach Anspruch 2 oder 3 mit dem folgenden Merkmal:
a. die Fortsätze sind derart tordiert, dass eine Haupterstreckungsebene (Y, Z) der Teilverbindungsabschnitte (62A, 62B) mit einer Haupterstreckungsebene (X, Y) des Hauptabschnitts (68) einen Winkel von etwa 90° (+/- 20°) einschließen.

5. Batterie (10) nach Anspruch 1 mit dem folgenden Merkmal:
a. der erste Verbindungsabschnitt (62) des Ableiterelements (60) verfügt über zwei Teilverbindungsabschnitte (62A, 62B), die auf gegenüberliegenden Seiten des Kontaktabschnitts der Elektrode (52) angeordnet sind und flächenparallel zueinander an dieser anliegen.

6. Batterie (10) nach einem der vorstehenden Ansprüche mit dem folgenden Merkmal:
a. das Ableiterelement (60) ist mittels einer Schweiß- oder Lötverbindungverbindung mit dem Kontaktabschnitt (54) der Elektrode (52) verbunden,
oder alternativ mit dem Merkmal:
b. das Ableiterelement ist mittels eines einer kraftschlüssig gegen Trennen gesicherten Verbindung oder mittels einer formschlüssigen Verbindung mit dem Kontaktabschnitt der Elektrode verbunden.

7. Batterie (10) nach einem der vorstehenden Ansprüche mit dem folgenden Merkmal:
a. das Ableiterelement (60) ist mittels einer formschlüssig gegen Trennen gesicherten Verbindung mit der Poleinheit (30) verbunden,
oder alternativ mit dem Merkmal:
b. das Ableiterelement ist mittels eines einer kraftschlüssig gegen Trennen gesicherten Verbindung oder mittels einer stoffschlüssig gegen Trennen gesicherten Verbindung mit der Poleinheit verbunden.

8. Batterie (10) nach einem der vorstehenden Ansprüchen mit mindestens einem der nachfolgenden Merkmale:
a. das Gehäuse (20) weist eine prismatische Formgebung auf, und/oder
b. die Batterie (10) weist zwei elektrisch leitfähig Poleinheiten (30) auf, die auf der gleichen Seite des Gehäuses (20) die Gehäusewandung (24) durchdringen, und/oder
c. die Batterie (10) weist zwei elektrisch leitfähig Poleinheiten (30) auf, wobei den beiden Poleinheiten (30) baugleiche Ableiterelemente (60) zugeordnet sind, mittels derer sie mit mindestens zwei Kontaktabschnitten der zwei Elektroden (52) der Batterie verbunden sind, und/oder
d. die Batterie (10) weist eine Vielzahl von Kontaktabschnitten (54) auf, die zwischen den Verbindungsteilabschnitten (62A, 62B) des Ableiterelements (60) angeordnet sind und/oder
e. das Ableiterelement (60) ist aus Kupfer, Nickel, Silber, Gold, Aluminium, Zinn oder Edelstahl oder aus einer hierauf basierenden Legierung als Basismaterial gefertigt, und/oder
f. das Ableiterelement (60) ist mit einer Beschichtung versehen, und/oder
g. das Ableiterelement (60) ist mittels einer Stanz- und Biegebearbeitung aus einem Blech hergestellt, welches eine Dicke zwischen 0,2mm und 2,0mm aufweist, und/oder
h. zur Herstellung einer Schraubverbindung, einer Nietverbindung oder einer Stiftverbindung zwischen dem Ableiterelement (60) und der Poleinheit (30) und/oder der Elektrode ist mindestens eine Durchbrechung (66) im Ableiterelement (60) vorgesehen, und/oder
i. die mindestens eine Einzelzelle ist als Elektrodenwickels (50) oder als mehrlagiger Stoß von Elektroden ausgebildet.

9. Ableiterelement (60) für eine Batterie (10) zur Herstellung einer elektrischen Verbindung zwischen einem Kontaktabschnitt (54) einer Elektrode (52) und einer Poleinheit (30) der Batterie (10) mit dem folgenden Merkmal:
a. das Ableiterelement (60) weist einen ersten Verbindungsabschnitt (62) zur Anbringung am Kontaktabschnitt (54) der Elektrode (52) und einen zweiten Verbindungsabschnitt (64) zur Anbringung an der Poleinheit (30) auf, und
b. das Ableiterelement (60) ist als Blechteil ausgestaltet, welches zwischen dem ersten Verbindungsabschnitt (62) und dem zweiten Verbindungsabschnitt (64) über mindestens zwei Biegebereiche verfügt, im Bereich derer das Blechteil jeweils entlang einer Biegelinie (72, 74, 72A, 72B, 74A, 74B, 78A, 78B) gebogen ist, und
c. die Biegelinien (72, 74, 72A, 72B, 74A, 74B, 78A, 78B) sind zueinander im Wesentlichen parallel ausgerichtet sind, d.h. dass die Ausrichtungen der Biegelinien um nicht mehr als 10° voneinander abweichen und entlang der Biegelinien (72, 74, 72A, 72B, 74A, 74B, 78A, 78B) ist das Ableiterelement (60) in gegenläufigen Biegerichtungen um Biegewinkel größer 90° gebogen, so dass das Ableiterelement (60) abschnittsweise Z-artig geformt ist,
**gekennzeichnet durch** das folgende Merkmal:
d. das Ableiterelement (60) verfügt zwischen dem ersten Verbindungsabschnitt (62) und dem zweiten Verbindungsabschnitt (64) über mindestens einen Torsionsbereich (76A, 76B), im Bereich dessen das Blechteil schraubenartig tordiert ist.

10. Verfahren zur Herstellung eines Ableiterelements (60) zur Verbindung eines Kontaktabschnitts einer Elektrode (52) einer Batterie (10) mit einer Poleinheit (30) der Batterie (10) **gekennzeichnet durch** die folgenden Merkmale:
a. in einem Stanzschritt wird aus einem Metallblech wird ein Flachteil (60') ausgestanzt und
b. in einem Umformschritt wird das Flachteil (60') mindestens zweimal gegenläufig in zwei Biegebereichen entlang jeweils einer Biegelinie (72A, 72B, 74A, 74B, 78A, 78B) um Biegewinkel größer 90° gebogen, so dass das Ableiterelement (60) hierdurch abschnittsweise Z-artig geformt ist, und mindestens einmal in einem Torsionsbereich (76A, 76B) tordiert und erhält somit die für das Ableiterelement (60) gewünschte Formgebung.

11. Verfahren nach Anspruch 10 mit mindestens einem der folgenden Merkmale:
a. im Stanzschritt wird mindestens eine Durchbrechung (66) in das Flachteil eingebracht.

12. Verfahren zur Herstellung einer Batterie (10) **gekennzeichnet durch** die folgenden Merkmale:
a. es wird mindestens ein Ableiterelement (60) mittels eines Verfahrens mit den Verfahrensmerkmalen eines der Ansprüche 10 und 11 hergestellt und
b. das Ableiterelement (60) wird einerseits mit einem Kontaktabschnitt (54) einer Elektrode (52) und andererseits mit einer Poleinheit (30) der Batterie (10) elektrisch verbunden.

13. Verfahren zur Herstellung einer Batterie (10) nach Anspruch 12 mit den folgenden Merkmalen:
a. die Verbindung zwischen einem ersten Verbindungsabschnitt (62) des Ableiterelements (60) und dem Kontaktabschnitt (54) der Elektrode (52) erfolgt mittels Widerstandschweißens.

## Claims

1. Battery (10) having the following features:
a. the battery (10) comprises a housing (20) having a housing wall (24), which surrounds an interior of the battery (10), and
b. the battery (10) comprises at least one pole unit (30), which is of electrically conductive configuration and penetrates the housing wall (24), and
c. the battery (10) comprises in the interior thereof at least one individual cell having at least two electrodes (52),
d. at least one electrode (52) is connected to at least one pole unit (30) by means of an diverter element (60), which has a first connecting section (62) for attaching to at least one contact section (54) of the electrode (52) and a second connecting section (64) for attaching to the pole unit (30), and
e. the diverter element (60) is configured as a sheet-metal part, which has at least two bending regions between the first connecting section (62) and the second connecting section (64), in the region of which bending regions the sheet-metal part is bent in each case along a bending line (72, 74, 72A, 72B, 74A, 74B, 78A, 78B), and
f. the bending lines (72, 74, 72A, 72B, 74A, 74B, 78A, 78B) are oriented substantially parallel to one another, that is to say that the orientations of the bending lines do not deviate from one another by more than 10° and the diverter element (60) is bent along the bending lines (72, 74, 72A, 72B, 74A, 74B, 78A, 78B) in opposite bending directions by bending angles greater than 90° such that the diverter element (60) is formed in sections in a Z-like manner, **characterized by** the following additional feature:
g. the diverter element (60) has at least one torsion region (76A, 76B) between the first connecting section (62) and the second connecting section (64), in the region of which torsion region the sheet-metal part is twisted in a screw-like manner.

2. Battery (10) according to Claim 1 having the following feature:
a. at least two bending regions are provided between the two connecting sections (62, 64) of the diverter element, the bending lines of which bending regions are angled with respect to one another.

3. Battery (10) according to either of Claims 1 and 2 having the following feature:
a. the first connecting section (62) of the diverter element (60) has two connecting subsections (62A, 62B), which are provided on two projections (70A, 70B) of the diverter element, which both project from a common main section (68) of the diverter element (60).

4. Battery (10) according to Claim 2 or 3 having the following feature:
a. the projections are twisted in such a way that a main plane of extent (Y, Z) of the connecting subsections (62A, 62B) enclose with a main plane of extent (X, Y) of the main section (68) an angle of approximately 90° (+/-20°).

5. Battery (10) according to Claim 1 having the following feature:
a. the first connecting section (62) of the diverter element (60) has two connecting subsections (62A, 62B), which are arranged on opposite sides of the contact section of the electrode (52) and bear against said contact section in a manner two-dimensionally parallel to one another.

6. Battery (10) according to one of the preceding claims having the following feature:
a. the diverter element (60) is connected to the contact section (54) of the electrode (52) by means of a welded or soldered connection,
or alternatively having the feature:
b. the diverter element is connected to the contact section of the electrode by means of a connection secured against separation in a force-fitting manner or by means of a form-fitting connection.

7. Battery (10) according to one of the preceding claims having the following feature:
a. the diverter element (60) is connected to the pole unit (30) by means of a connection secured against separation in a form-fitting manner,
or alternatively having the feature:
b. the diverter element is connected to the pole unit by means of a connection secured against separation in a force-fitting manner or by means of a connection secured against separation in a materially bonded manner.

8. Battery (10) according to one of the preceding claims having at least one of the following features:
a. the housing (20) has a prismatic shaping, and/or
b. the battery (10) has two electrically conductive pole units (30), which penetrate the housing wall (24) on the same side of the housing (20), and/or
c. the battery (10) has two electrically conductive pole units (30), wherein structurally identical diverter elements (60) are associated with the two pole units (30), by means of which diverter elements said pole units are connected to at least two contact sections of the two electrodes (52) of the battery, and/or
d. the battery (10) has a multiplicity of contact sections (54), which are arranged between the connecting subsections (62A, 62B) of the diverter element (60) and/or
e. the diverter element (60) is produced from copper, nickel, silver, gold, aluminium, tin or stainless steel or from an alloy based thereon as base material, and/or
f. the diverter element (60) is provided with a coating, and/or
g. the diverter element (60) is manufactured by means of a stamping and bending procedure from a metal sheet, which has a thickness between 0.2 mm and 2.0 mm, and/or
h. at least one aperture (66) is provided in the diverter element (60) to establish a screw connection, a rivet connection or a pin connection between the diverter element (60) and the pole unit (30) and/or the electrode, and/or
i. the at least one individual cell is formed as an electrode winding (50) or as a multi-layered stack of electrodes.

9. Diverter element (60) for a battery (10) for establishing an electrical connection between a contact section (54) of an electrode (52) and a pole unit (30) of the battery (10) having the following feature:
a. the diverter element (60) has a first connecting section (62) for attaching to the contact section (54) of the electrode (52) and a second connecting section (64) for attaching to the pole unit (30), and
b. the diverter element (60) is configured as a sheet-metal part, which has at least two bending regions between the first connecting section (62) and the second connecting section (64), in the region of which bending regions the sheet-metal part is bent in each case along a bending line (72, 74, 72A, 72B, 74A, 74B, 78A, 78B), and
c. the bending lines (72, 74, 72A, 72B, 74A, 74B, 78A, 78B) are oriented substantially parallel to one another, that is to say that the orientations of the bending lines do not deviate from one another by more than 10° and the diverter element (60) is bent along the bending lines (72, 74, 72A, 72B, 74A, 74B, 78A, 78B) in opposing bending directions by bending angles greater than 90° such that the diverter element (60) is formed in sections in a Z-like manner,
**characterized by** the following feature:
d. the diverter element (60) has at least one torsion region (76A, 76B) between the first connecting section (62) and the second connecting section (64), in the region of which torsion region the sheet-metal part is twisted in a screw-like manner.

10. Method for producing an diverter element (60) for connecting a contact section of an electrode (52) of a battery (10) to a pole unit (30) of the battery (10), **characterized by** the following features:
a. in a stamping step, a flat part (60') is stamped out of a metal sheet and
b. in a deformation step, the flat part (60') is bent at least twice in opposite directions in two bending regions along in each case one bending line (72A, 72B, 74A, 74B, 78A, 78B) by bending angles greater than 90° such that the diverter element (60) is formed in sections in a Z-like manner as a result and is twisted at least once in a torsion region (76A, 76B) and therefore obtains the shaping desired for the diverter element (60).

11. Method according to Claim 10 having at least one of the following features:
a. in the stamping step, at least one aperture (66) is introduced into the flat part.

12. Method for producing a battery (10), **characterized by** the following features:
a. at least one diverter element (60) is produced by means of a method having the method features of either of Claims 10 and 11 and
b. the diverter element (60) is electrically connected on one side to the contact section (54) of an electrode (52) and on the other side to a pole unit (30) of the battery (10).

13. Method for producing a battery (10) according to Claim 12 having the following features:
a. the connection between a first connecting section (62) of the diverter element (60) and the contact section (54) of the electrode (52) is effected by means of resistance welding.

## Revendications

1. Batterie (10) avec les caractéristiques suivantes:
a. la batterie (10) comprend un boîtier (20) avec une paroi de boîtier (24), qui entoure un espace intérieur de la batterie (10), et
b. la batterie (10) comprend au moins une unité polaire (30), qui est électriquement conductrice et qui traverse la paroi de boîtier (24), et
c. la batterie (10) comprend dans son espace intérieur au moins une cellule individuelle avec au moins deux électrodes (52),
d. au moins une électrode (52) est reliée à au moins une unité polaire (30) au moyen d'une patte de connexion (60), qui présente une première partie de connexion (62) à appliquer à au moins une partie de contact (54) de l'électrode (52) et une deuxième partie de connexion (64) à appliquer à l'unité polaire (30), et
e. la patte de connexion (60) est formée par une pièce de tôle, qui comporte entre la première partie de connexion (62) et la deuxième partie de connexion (64) au moins deux zones de pliage, dans la région desquelles la pièce de tôle est pliée respectivement le long d'une ligne de pliage (72, 74, 72A, 72B, 74A, 74B, 78A, 78B), et
f. les lignes de pliage (72, 74, 72A, 72B, 74A, 74B, 78A, 78B) sont orientées essentiellement parallèlement l'une à l'autre, c'est-à-dire que les orientations des lignes de pliage ne diffèrent pas l'une de l'autre de plus de 10° et la patte de connexion (60) est pliée le long des lignes de pliage (72, 74, 72A, 72B, 74A, 74B, 78A, 78B) d'un angle de pliage de plus de 90° dans des directions de pliage opposées, de telle manière que la patte de connexion (60) ait partiellement une forme en Z,
**caractérisée par** la caractéristique supplémentaire suivante:
g. la patte de connexion (60) comporte entre la première partie de connexion (62) et la deuxième partie de connexion (64) au moins une zone de torsion (76A, 76B), dans la région de laquelle la pièce de tôle est tordue en forme hélicoïdale.

2. Batterie (10) selon la revendication 1, avec la caractéristique suivante:
a. il est prévu entre les deux parties de connexion (62, 64) de la patte de connexion au moins deux zones de pliage, dont les lignes de pliage forment un angle l'une par rapport à l'autre.

3. Batterie (10) selon une des revendications 1 et 2, avec la caractéristique suivante:
a. la première partie de connexion (62) de la patte de connexion (60) comporte deux parties de connexion partielles (62A, 62B), qui sont prévues sur deux prolongements (70A, 70B) de la patte de connexion, qui partent tous les deux d'une partie principale commune (68) de la patte de connexion (60).

4. Batterie (10) selon une revendication 2 ou 3, avec la caractéristique suivante:
a. les prolongements sont tordus, de telle manière qu'un plan d'extension principal (Y, Z) des parties de connexion partielles (62A, 62B) forme avec un plan d'extension principal (X, Y) de la partie principale (68) un angle d'environ 90° (± 20°).

5. Batterie (10) la revendication 1, avec la caractéristique suivante:
a. la première partie de connexion (62) de la patte de connexion (60) comporte deux parties de connexion partielles (62A, 62B), qui sont disposées sur deux côtés opposés de la partie de contact de l'électrode (52) et s'appliquent sur celle-ci à plat parallèlement l'une à l'autre.

6. Batterie (10) selon l'une quelconque des revendications précédentes, avec la caractéristique suivante:
a. la patte de connexion (60) est assemblée à la partie de contact (54) de l'électrode (52) au moyen d'un assemblage soudé ou brasé,
ou en variante avec la caractéristique suivante:
b. la patte de connexion est assemblée à la partie de contact de l'électrode au moyen d'un assemblage garanti par la force contre la séparation ou au moyen d'un assemblage par emboîtement.

7. Batterie (10) selon l'une quelconque des revendications précédentes, avec la caractéristique suivante:
a. la patte de connexion (60) est assemblée à l'unité polaire (30) au moyen d'un assemblage garanti par emboîtement contre la séparation,
ou en variante avec la caractéristique suivante:
b. la patte de connexion est assemblée à l'unité polaire au moyen d'un assemblage garanti par la force contre la séparation ou au moyen d'un assemblage garanti matériellement contre la séparation.

8. Batterie (10) selon l'une quelconque des revendications précédentes, présentant au moins une des caractéristiques suivantes:
a. le boîtier (20) présente une forme prismatique, et/ou
b. la batterie (10) présente deux unités polaires électriquement conductrices (30), qui traversent la paroi de boîtier (24) sur le même côté du boîtier (20), et/ou
c. la batterie (10) présente deux unités polaires électriquement conductrices (30), dans laquelle des pattes de connexion identiques (60) sont associées aux deux unités polaires (30), au moyen desquelles elles sont connectées à au moins deux parties de contact des deux électrodes (52) de la batterie, et/ou
d. la batterie (10) présente une multiplicité de parties de contact (54), qui sont disposées entre les parties de connexion partielles (62A, 62B) de la patte de connexion (60) et/ou
e. la patte de connexion (60) est fabriquée en cuivre, nickel, argent, or, aluminium, étain ou acier allié ou en un alliage à base de ceux-ci comme matériau de base, et/ou
f. la patte de connexion (60) est munie d'un revêtement, et/ou
g. la patte de connexion (60) est fabriquée par un traitement de découpage et de pliage à partir d'une tôle, qui présente une épaisseur comprise entre 0,2 mm et 2,0 mm, et/ou
h. il est prévu au moins une brèche (66) dans la patte de connexion (60) pour la réalisation d'un assemblage vissé, d'un assemblage rivé ou d'un assemblage agrafé entre la patte de connexion (60) et l'unité polaire (30) et/ou l'électrode, et/ou
i. ladite au moins une cellule individuelle est réalisée sous la forme d'un bobinage d'électrode (50) ou d'une pile multicouche d'électrodes.

9. Patte de connexion (60) pour une batterie (10) afin de réaliser une connexion électrique entre une partie de contact (54) d'une électrode (52) et une unité polaire (30) de la batterie (10), avec les caractéristiques suivantes:
a. la patte de connexion (60) présente une première partie de connexion (62) à appliquer sur la partie de contact (54) de l'électrode (52) et une deuxième partie de connexion (64) à appliquer sur l'unité polaire (30), et
b. la patte de connexion (60) est formée par une pièce de tôle, qui comporte entre la première partie de connexion (62) et la deuxième partie de connexion (64) au moins deux zones de pliage, dans la région desquelles la pièce de tôle est pliée respectivement le long d'une ligne de pliage (72, 74, 72A, 72B, 74A, 74B, 78A, 78B), et
c. les lignes de pliage (72, 74, 72A, 72B, 74A, 74B, 78A, 78B) sont orientées essentiellement parallèlement l'une à l'autre, c'est-à-dire que les orientations des lignes de pliage ne diffèrent pas l'une de l'autre de plus de 10° et la patte de connexion (60) est pliée le long des lignes de pliage (72, 74, 72A, 72B, 74A, 74B, 78A, 78B) d'un angle de pliage de plus de 90° dans des directions de pliage opposées, de telle manière que la patte de connexion (60) ait partiellement une forme en Z,
**caractérisée par** la caractéristique suivante:
d. la patte de connexion (60) comporte entre la première partie de connexion (62) et la deuxième partie de connexion (64) au moins une zone de torsion (76A, 76B), dans la région de laquelle la pièce de tôle est tordue en forme hélicoïdale.

10. Procédé de fabrication d'une patte de connexion (60) pour la connexion d'une partie de contact d'une électrode (52) d'une batterie (10) à une unité polaire (30) de la batterie (10), **caractérisé par** les caractéristiques suivantes:
a. on découpe une pièce plate (60') hors d'une tôle métallique dans une étape de découpage, et
b. dans une étape de formage, on plie la pièce plate (60') au moins deux fois dans des directions opposées dans deux zones de pliage respectivement le long d'une ligne de pliage (72A, 72B, 74A, 74B, 78A, 78B) d'un angle de pliage supérieur à 90°, de telle manière que la patte de connexion (60) soit de ce fait déformée partiellement en forme de Z, et on la tord au moins une fois dans un zone de torsion (76A, 76B) et on obtient ainsi la forme désirée pour la patte de connexion (60).

11. Procédé selon la revendication 10, avec au moins une des caractéristiques suivantes:
a. dans l'étape de découpage, on pratique au moins une brèche (66) dans la pièce plate.

12. Procédé de fabrication d'une batterie (10), **caractérisé par** les caractéristiques suivantes:
a. on fabrique au moins une patte de connexion (60) au moyen d'un procédé présentant les caractéristiques de procédé d'une des revendications 10 et 11, et
b. on connecte électriquement la patte de connexion (60) d'une part à une partie de contact (54) d'une électrode (52) et d'autre part à une unité polaire (30) de la batterie (10).

13. Procédé de fabrication d'une batterie (10) selon la revendication 12, avec les caractéristiques suivantes:
a. on réalise la connexion entre une première partie de connexion (62) de la patte de connexion (60) et la partie de contact (54) de l'électrode (52) par soudage par résistance.
